# EUROPÄISCHE PATENTANMELDUNG

(11) **EP 4 822 935 A1**
(43) Veröffentlichungstag der Anmeldung: **14.10.2026**
(21) Anmeldenummer: 26155211.1
(22) Anmeldetag: 30.01.2026
(51) Int. Cl.: H02J 3/1878

(54) **REGELUNGSVORRICHTUNG UND VERFAHREN ZUM PARAMETRIERTEN REGELN EINES TRANSFORMATORS**

(30) Priorität: 08.04.2025 DE 102025113736
(71) Anmelder: LEW Verteilnetz GmbH, 86150 Augsburg (DE)
(72) Erfinder: Kreutmayr, Simon, 86163 Augsburg (DE); Uhrig, Martin, 86415 Mering (DE); Baumgartner, Sonja, 86150 Augsburg (DE)
(74) Vertreter: Gunzelmann, Rainer

(57) **Zusammenfassung**

Die Erfindung betrifft eine Regelungsvorrichtung zum parametrierten Regeln eines Transformators, die eine Messeinrichtung, die eingerichtet ist, um eine Zeitreihe statischer Messdaten einer Wirkleistung des Transformators zu erlangen, eine Ermittlungseinrichtung, die eingerichtet ist, um mit der Zeitreihe statischer Messdaten und einer Nennleistung des Transformators als Eingangsgrößen optimale Betriebsparameter für den Transformator als Ausgangsgrößen derart zu ermitteln, dass die Betriebsparameter hinsichtlich einer aktuell dominierenden Auslastungssituation des Transformators optimiert werden, und eine Regelungseinrichtung umfasst, die eingerichtet ist, um den Transformator auf der Grundlage der ermittelten optimalen Betriebsparameter dynamisch zu regeln. Die Erfindung betrifft weiterhin ein Verfahren zum parametrierten Regeln eines Transformators, das die Schritte umfasst: Erlangen einer Zeitreihe statischer Messdaten einer Wirkleistung des Transformators, Ermitteln, mit der Zeitreihe statischer Messdaten und einer Nennleistung des Transformators als Eingangsgrößen, von optimalen Betriebsparametern für den Transformator als Ausgangsgrößen derart, dass die Betriebsparameter hinsichtlich einer aktuell dominierenden Auslastungssituation des Transformators optimiert werden, und dynamisches Regeln des Transformators auf der Grundlage der ermittelten optimalen Betriebsparameter.

## Beschreibung

### Technisches Gebiet

Die vorliegende Erfindung betrifft eine Regelungsvorrichtung zum parametrierten Regeln eines Transformators, ein Verfahren zum parametrierten Regeln eines Transformators, ein Computerprogramm und ein computerlesbares Medium. Die vorliegende Erfindung betrifft insbesondere eine Regelungsvorrichtung (mit zugehörigem Verfahren, Computerprogramm und computerlesbarem Medium), die mit einer Zeitreihe statischer Messdaten und einer Nennleistung des Transformators als Eingangsgrößen optimale Betriebsparameter für den Transformator als Ausgangsgrößen derart ermittelt, dass die Betriebsparameter hinsichtlich einer aktuell dominierenden Auslastungssituation des Transformators optimiert werden.

### Verwandter Stand der Technik

Transformatoren, insbesondere regelbare Ortsnetztransformatoren (rONT), können Spannung niederspannungsseitig auf einen festen Sollwert regeln (z.B. Ausgangsspannung U/Nennspannung Un = 100 %), wodurch in der Netzplanung ein maximal zulässiger Spannungshub bzw. -fall von etwa +/-8 % auf Niederspannungsleitungen zur Verfügung steht. Bei einer dynamischen Sollwertregelung wird die Spannung je nach Belastungssituation z.B. zwischen U/Un=96% und U/Un=104% variiert, wodurch in der Netzplanung ein maximal zulässiger Spannungshub bzw. -fall von z.B. 12 % zulässig ist. Damit können die Spannungsgrenzwerte (z.B. nach DIN EN 50160) auch in Niederspannungsstromkreisen mit hoher Leitungslänge, kleinem Leitungsquerschnitt (hohe Leitungsimpedanz) und ungünstiger Lastverteilung eingehalten werden.

Weil die Parametrierung der dynamischen Spannungsregelung individuell an die Belastungscharakteristik vor Ort angepasst werden muss und deshalb aufwändig ist, kommt bisher nur die statische Sollwertregelung zum Einsatz.

Die EP 3 667 851 B1 offenbart ein computerimplementiertes Verfahren zur Erstellung von dynamischen Modellen von Netzknoten in einem Nieder- und/oder Mittelspannungs-Verteilnetz, das geeignet ist zur Verwendung in einem Netzbetriebsführungssystem für die elektrische Stromverteilung, wobei mit zumindest einer dezentralen Einheit zur Messwertaufnahme und -speicherung Zeitreihen von strombezogenen Messwerten, welche zumindest einen bestimmten Netzknoten, welcher vorzugsweise als Übergabepunkt von Mittelspannung auf Niederspannung agiert, betreffen, erfasst und abgespeichert werden. Auf Basis dieser Zeitreihen wird mittels eines selbstlernenden Algorithmus ein dynamisches Modell für das Leistungsprofil und/oder das Blindleistungsprofil des oder der betreffenden Netzknoten erstellt. Die Erstellung des dynamischen Modells geschieht wiederholt, insbesondere automatisiert, in regelmäßigen Abständen. Eine Ermittlung/Optimierung der Betriebsparameter hinsichtlich einer aktuell dominierenden Auslastungssituation des Transformators findet jedoch nicht statt.

Die EP 4 057 467 A1, die DE 10 2017 131 A1 und die DE 10 2011 108 255 A1 offenbaren jeweils Verfahren und Vorrichtungen zum Betreiben/Regeln von Ortsnetzstationen. Eine Ermittlung/Optimierung der Betriebsparameter hinsichtlich einer aktuell dominierenden Auslastungssituation des Transformators findet jedoch nicht statt.

### Kurzfassung der Erfindung

Der Erfindung liegt daher die Aufgabe zugrunde, eine verbesserte Regelungsvorrichtung bzw. -verfahren bereitzustellen, die bzw. das zumindest einige der vorstehend beschriebenen Probleme löst.

Diese Aufgabe wird durch die vorliegende Erfindung gelöst, wie sie in den unabhängigen Ansprüchen dargestellt ist. Bevorzugte Ausführungsbeispiele sind in den abhängigen Ansprüchen dargestellt.

In einer ersten Ausgestaltung wird eine Regelungsvorrichtung zum parametrierten Regeln eines Transformators bereitgestellt, die eine Messeinrichtung, die eingerichtet ist, um eine Zeitreihe statischer Messdaten einer Wirkleistung des Transformators zu erlangen, eine Ermittlungseinrichtung, die eingerichtet ist, um mit der Zeitreihe statischer Messdaten und einer Nennleistung des Transformators als Eingangsgrößen optimale Betriebsparameter für den Transformator als Ausgangsgrößen derart zu ermitteln, dass die Betriebsparameter hinsichtlich einer aktuell dominierenden Auslastungssituation des Transformators optimiert werden, und eine Regelungseinrichtung umfasst, die eingerichtet ist, um den Transformator auf der Grundlage der ermittelten optimalen Betriebsparameter dynamisch zu regeln.

In einer ersten Variante der ersten Ausgestaltung definieren die optimalen Betriebsparameter vorzugsweise eine Regelkennlinie, die eine Abszisse, die einen Quotienten aus einer Differenz der Ausgangsleistung des Transformators minus der Nennleistung des Transformators über der Nennleistung des Transformators als Prozentwert definiert, und eine Ordinate umfasst, die einen Quotienten aus einer Ausgangsspannung des Transformators über einer Nennspannung als Prozentwert definiert. In diesem Fall definieren positive Werte auf der Abszisse vorzugsweise einen Bezugsbetrieb des Transformators, bei dem durch ein Stromnetz aus dem Transformator Wirkleistung bezogen wird, definieren negative Werte auf der Abszisse vorzugsweise einen Einspeisebetrieb des Transformators, bei dem aus dem Stromnetz dem Transformator Wirkleistung eingespeist wird, und definiert ein Ursprung auf Abszisse und Ordinate vorzugsweise einen ausgewogenen Betrieb des Transformators.

In einer ersten Verbesserung der ersten Variante umfasst die Regelkennlinie vorzugsweise einen ersten Abschnitt, der als Konstante im dritten Quadranten verläuft, einen zweiten Abschnitt, der an den ersten Abschnitt anschließt und zumindest teilweise im dritten Quadranten als Gerade mit einer ersten konstanten Steigung bis zu einem Nullpunkt verläuft, einen dritten Abschnitt, der an den zweiten Abschnitt anschließt und zumindest teilweise im ersten Quadranten von dem Nullpunkt aus als Gerade mit einer zweiten konstanten Steigung verläuft, und einen vierten Abschnitt, der an den dritten Abschnitt anschließt und als Konstante im ersten Quadranten verläuft. In diesem Fall umfassen die optimalen Betriebsparameter vorzugsweise einen ersten Knickpunkt am Übergang von dem dritten Abschnitt in den vierten Abschnitt, den Nullpunkt am Übergang von dem zweiten Abschnitt in den dritten Abschnitt, und eine Maximalspannung des Transformators bei Bezugsbetrieb als die Konstante des vierten Abschnitts. Im Falle einer dominierenden Starklastsituation des Transformators, insbesondere vorzugsweise verbunden mit einer Spannungsabsenkung am Transformator, ist die Ermittlungseinrichtung vorzugsweise eingerichtet, um den Nullpunkt auf der Ordinate aus dem Ursprung in positiver Richtung zu verschieben, im Falle einer dominierenden Starkeinspeisesituation, insbesondere vorzugsweise verbunden mit einer Spannungsanhebung am Transformator, ist die Ermittlungseinrichtung vorzugsweise eingerichtet, um den Nullpunkt auf der Ordinate aus dem Ursprung in negativer Richtung zu verschieben, und im Falle eines Lastzuwachses am Transformator, insbesondere vorzugsweise durch Zubau von Wärmepumpen und/oder Elektromobilität, ist die Ermittlungseinrichtung vorzugsweise eingerichtet, um die Maximalspannung anzuheben. Der erste Knickpunkt liegt vorzugsweise auf der Abszisse bei +40% und auf der Ordinate bei 104%, der Nullpunkt auf der Abszisse liegt vorzugsweise bei 0% und auf der Ordinate bei 100%, und die Maximalspannung liegt vorzugsweise auf der Ordinate bei 104%.

In einer zweiten Verbesserung der ersten Variante und der ersten Verbesserung umfassen die optimalen Betriebsparameter ferner vorzugsweise einen zweiten Knickpunkt am Übergang von dem ersten Abschnitt in den zweiten Abschnitt, und eine Minimalspannung des Transformators bei Einspeisebetrieb als die Konstante des ersten Abschnitts. In diesem Fall liegt der zweite Knickpunkt vorzugsweise auf der Abszisse bei -40% und auf der Ordinate bei 96% und liegt die Minimalspannung vorzugsweise auf der Ordinate bei 96%.

In einer zweiten Variante der ersten Ausgestaltung (betreffend sämtliche Varianten und Verbesserungen) ist die Ermittlungseinrichtung vorzugsweise eingerichtet ist, die optimalen Betriebsparameter fortlaufend zu ermitteln.

In einer dritten Variante der ersten Ausgestaltung (betreffend sämtliche Varianten und Verbesserungen) ist der Transformator vorzugsweise ein regelbarer Ortsnetztransformator, rONT.

In einer vierten Variante der ersten Ausgestaltung (betreffend sämtliche Varianten und Verbesserungen) ist die Messeinrichtung vorzugsweise eingerichtet ist, um von einer Messdatenquelle, vorzugsweise einer Multimessvorrichtung, eine Messwerthistorie der Wirkleistung zu empfangen. Insbesondere vorzugsweise umfasst die Messdatenquelle zusätzlich ein intelligentes Messsystem, iMSys, und empfängt die Messeinrichtung zusätzlich eine Messwerthistorie einer Spannung durch das iMSys in einer Weitbereichsregelung.

In einer zweiten Ausgestaltung wird ein Verfahren zum parametrierten Regeln eines Transformators bereitgestellt, das die Schritte Erlangen einer Zeitreihe statischer Messdaten einer Wirkleistung des Transformators, Ermitteln, mit der Zeitreihe statischer Messdaten und einer Nennleistung des Transformators als Eingangsgrößen, von optimalen Betriebsparametern für den Transformator als Ausgangsgrößen derart, dass die Betriebsparameter hinsichtlich einer aktuell dominierenden Auslastungssituation des Transformators optimiert werden, und dynamisches Regeln des Transformators auf der Grundlage der ermittelten optimalen Betriebsparameter umfasst.

In einer dritten Ausgestaltung wird ein Computerprogramm bereitgestellt, das Codeabschnitte speichert, die bei Ausführung auf einem Prozessor einer Regelungsvorrichtung die Regelungsvorrichtung veranlassen, alle Schritte des Verfahrens nach der zweiten Ausgestaltung durchzuführen.

In einer vierten Ausgestaltung wird ein computerlesbares Medium bereitgestellt, das eingerichtet ist, um das Computerprogram nach der dritten Ausgestaltung zu speichern.

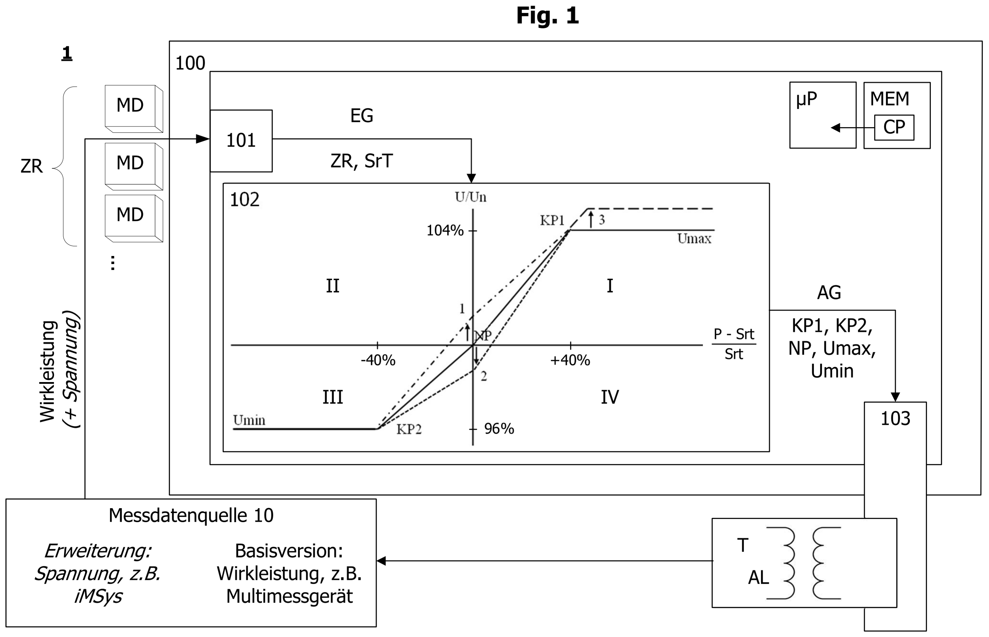

Ohne Beschränkung der Allgemeinheit kann die Erfindung wie folgt zusammengefasst werden:
- Algorithmus, welcher basierend auf historischen Messdaten die Regelkennlinie oder statische Sollwerte eines regelbaren Ortsnetztransformators (rONT) definiert und im laufenden Betrieb optimiert
   ∘ Eingangsdaten:
      ▪ Nennleistung des Transformators
      ▪ Leistung-/Strommessung am Transformator
      ▪ Optional Spannungen von Smart Metern aus dem unterlagerten Netzgebiet (z.B. Netzzustandsdaten TAF 10)
      ▪ Zeitliche Auflösung typischerweise max. 1 min bis min. 10 min, höhere oder geringere Auflösungen sind auch möglich
- In einer Basisversion werden historische Messdaten der Wirkleistung (3-Phasiger Bezug bzw. Einspeisung) am Ortsnetztransformator, z.B. gemessen durch ein Multimessgerät, als Eingangsdaten für den Algorithmus verwendet , bzw.:
   In einer erweiterten Version werden historische Messdaten der Spannung an Netzanschlüssen, z.B. gemessen durch ein intelligentes Messystem, iMSys, zusätzlich als Eingangsdaten für den Algorithmus verwendet (z.B. wie bei einer Weitbereichsregelung).
- Basierend auf den Messdaten ermittelt der Algorithmus die optimalen Parameter für die dynamische Sollwertvorgabe
   o Mögliche Parameter/Ausgangsgrößen:
      ▪ Steigung der Kennlinie bei positiver und negativer Auslastung
      ▪ Knickpunkte der Kennlinie bei positiver und negativer Auslastung, Knickpunkt bei Bezug (KP1) P/Srt Bezug (z.B. +40 %) und U/Un bei Bezug (z.B. 104 %), Knickpunkt bei Einspeisung (KP2) P/Srt Einspeisung (z.B. -40 %) und U/Un bei Einspeisung (z.B. 96 %)
      ▪ Maximaler und minimaler Spannungssollwert: Maximaler U/Un bei Bezug (Umax) z.B. 104 % (P/Srt Bezug +100 %), minimaler U/Un bei Einspeisung (Umin) z.B. 96 % (P/Srt Einspeisung - 100 %)
      ▪ Y-Achsenabschnitt der Kennlinie (Spannungssollwert), d.h. Ursprung/Nullpunkt (NP), P/Srt (z.B. 0 %) und U/Un (z.B. 100 %)
- Verarbeitung:
   ∘ Zeitreihen der Wirkleistungsmessdaten werden statistisch ausgewertet.
   ∘ Vergleich eines aktuellen Messintervalls (z.B. mind. letzte Woche) mit Referenzintervallen (z.B. letztes Jahr), z.B. hinsichtlich der Maximalwerte, Perzentile, Durchschnittswerte.
   ∘ Wenn die im Algorithmus hinterlegte Schwellwerte für die Messgrößen erreicht werden (z.B. 10., 50. oder 90. Perzentil des Referenzintervalls), so erfolgt eine Anpassung der Kennlinienparameter.
   ∘ Ziel ist die Anpassung der Kennlinie auf die im aktuellen Messintervall dominierenden Auslastungssituation.
- Kennlinienanpassung:
   ∘ Grundsätzlich gilt, dass für eine optimale Parametrierung der Kennlinie die Nennleistung des Transformators neben den Leistungs-/Strommessungen als Referenzgröße im Algorithmus berücksichtigt wird.
   ∘ Dominierende Starklastsituation (verbunden mit Spannungsabsenkungen) führt tendenziell zu einer positiven Anpassung des NP auf der Ordinate (U/Un > 100 %, P/Srt = 0 %), vgl. (1) in Fig. 1.
   ∘ Dominierende Starkeinspeisesituation (verbunden mit einer Spannungsanhebung) führt tendenziell zu einer negativen Anpassung des NP auf der Ordinate (U/Un < 100 %, P/Srt = 0 %), vgl. (2) in Fig. 1.
   ∘ Lastzuwachs durch Zubau z.B. von Wärmepumpen und Elektromobilität führt zu einer Überschreitung der bisherigen Maximalwerte von P/Srt. Dies wird durch eine Anhebung von Umax berücksichtigt, vgl. (3) in Fig. 1.
   ∘ Je nach der Charakteristik der Leistungs-/Strommessungen am Transformator, sind weitere Anpassungen, z.B. auch in Kombination der oben Genannten möglich.
- Durch kontinuierliche Datenaufnahme kann die Parametrierung fortlaufend optimiert werden. Somit wird auch eine veränderte Belastungscharakteristik z.B. durch den Zubau von Einspeise- und Bezugsanlagen berücksichtigt.
- Die durch den Algorithmus bestimmten Parameter werden an die rONT übermittelt und durch diese umgesetzt
- Der Algorithmus wird lokal in der Ortsnetzstation betrieben, wenn keine Kommunikationsanbindung besteht. Mit Kommunikationsanbindung werden an zentraler Stelle die Parameter ermittelt und an das Steuergerät des rONT gesendet, wo diese für den Fall eines Kommunikationsausfalls gespeichert werden.

Zudem ermöglicht die vorliegende Offenbarung die folgenden Vorteile:
- Es können ohne zusätzlichen Netzausbau mehr Erzeugungs- (z.B. PV-Anlagen) und Bezugsanlagen (z.B. E-Mobilität, Wärmepumpen) in das Verteilnetz integriert werden.
- Die beschriebene Methodik kann auf das gesamte Netzgebiet angewendet werden, insbesondere sofern ein Transformator (rONT) vorhanden ist, der eine dynamische Sollwertvorgabe zulässt.

### Kurzbeschreibung der Zeichnungen

Die beiliegenden Zeichnungen zeigen Ausführungsbeispiele der Erfindung, auf die die vorliegende Erfindung jedoch in keiner Weise einzuschränken ist. In den Zeichnungen bezeichnen gleiche Bezugszeichen dieselbe oder ähnliche Komponente(n). Es sei darauf hingewiesen, dass die Darstellung von einzelnen Komponenten nicht die Möglichkeit ausschließt, dass die jeweilige zu Grunde liegende Funktionalität in mehreren Elementen zu implementieren sein kann. Es zeigen:
- Fig. 1: eine Regelungsvorrichtung zum parametrierten Regeln eines Transformators gemäß einem Ausführungsbeispiel der Erfindung;
- Fig. 2: ein Verfahren zum parametrierten Regeln eines Transformators gemäß einem Ausführungsbeispiel; und
- Figuren 3A bis 3D: ein Anwendungsbeispiel mit realen Messdaten in einem Beispielnetz.

### Ausführliche Beschreibung

In der nachstehenden Beschreibung werden, zum Zwecke der Erklärung nicht aber der Einschränkung, spezifische Details beschrieben, um ein grundlegendes Verständnis der hier vorgestellten Technik zu gewährleisten. Es ist für den Durchschnittsfachmann ersichtlich, dass die vorliegende Technik in anderen Ausführungsbeispielen verwirklicht werden kann, die von diesen spezifischen Details abweichen.

Darüber hinaus ist für den Fachmann ersichtlich, dass die hier beschriebenen Dienste, Funktionen und Schritte mithilfe von Software implementiert werden können, die in Verbindung mit einem programmierten/programmierbaren Mikroprozessor oder mithilfe einer anwendungsspezifischen integrierten Schaltung (ASIC), eines digitalen Signalprozessors (DSP) oder eines Allzweckcomputers implementiert wird. Es sei ebenso darauf hingewiesen, dass die folgenden Ausführungsbeispiele zwar im Zusammenhang mit Verfahren und Vorrichtungen beschrieben werden, die hier vorgestellte Technik jedoch auch in einem Computerprogramm bzw. Computerprogrammprodukt sowie in einem (übergeordneten) System verkörpert sein kann, das einen Computerprozessor und einen mit dem Prozessor verbundenen Speicher umfasst, wobei der Speicher mit einem oder mehreren Programmen/Codes codiert ist, die die hier offenbarten Dienste, Funktionen und Schritte ausführen. Dies gilt insbesondere für die Ausgestaltung eines automatisierten Verfahrens zum parametrierten Regeln des Transformators.

Fig. 1 zeigt eine Regelungsvorrichtung 100 gemäß einem Ausführungsbeispiel der Erfindung. Die Regelungsvorrichtung 100 kann Teil eines Systems 1 (z.B. eines Stromnetzes sein), das (zumindest) einen Transformator T und vorzugsweise eine Messdatenquelle 10 (z.B. eine Multimessvorrichtung in der Basisversion, optional ein intelligentes Messystem, iMSys, in der Erweiterung/Weitbereichsregelung) umfasst.

Die Regelungsvorrichtung 100 dient zum parametrierten Regeln des Transformators T und umfasst eine Messeinrichtung 101, die eingerichtet ist, um eine Zeitreihe ZR statischer Messdaten MD einer Wirkleistung des Transformators T zu erlangen. Mit anderen Worten, Zeitreihen ZR der Wirkleistungsmessdaten MD werden vorzugsweise statistisch ausgewertet, z.B. durch Vergleich eines aktuellen Messintervalls (z.B. mind. letzte Woche) mit Referenzintervallen (z.B. letztes Jahr), z.B. hinsichtlich Maximalwerten, Perzentilen und/oder Durchschnittswerten. Wenn im Algorithmus hinterlegte Schwellwerte für die Messgrößen erreicht werden (z.B. 10., 50. oder 90. Perzentil des Referenzintervalls), so erfolgt vorzugsweise eine Anpassung der Kennlinienparameter KP1, KP2, NP, Umax, Umin (als "BP" abgekürzt) - mit anderen Worten, der nachstehend beschriebene Betrieb der Ermittlungseinrichtung 102 kann von dem Erreichen der vorstehend beschriebenen Schwellenwerte abhängig gemacht werden. Ziel hierbei ist vorzugsweise die Anpassung der Regelkennlinie auf die im aktuellen Messintervall dominierende Auslastungssituation AL.

Die Regelungsvorrichtung 100 umfasst ferner eine Ermittlungseinrichtung 102, die eingerichtet ist, um mit der Zeitreihe ZR statischer Messdaten MD und einer Nennleistung Srt des Transformators T als Eingangsgrößen EG optimale Betriebsparameter BP für den Transformator T als Ausgangsgrößen AG derart zu ermitteln, dass die Betriebsparameter BP hinsichtlich einer aktuell dominierenden Auslastungssituation AL des Transformators T optimiert werden. Es sei angemerkt, dass sich "aktuell dominierend" vorzugsweise auf einen Zeitraum von Wochen bis Monaten bezieht. Vorzugsweise gilt, dass für eine optimale Parametrierung der Regelkennlinie die Nennleistung Srt des Transformators neben den Leistungs-/Strommessungen als Referenzgröße im Algorithmus berücksichtigt wird.

Mit anderen Worten, erfindungsgemäß implementiert die Regelungsvorrichtung 100 einen Algorithmus, welcher basierend z.B. auf historischen Messdaten (bzw. einer Messwerthistorie) die Regelkennlinie (oder statische Sollwerte) eines regelbaren Ortsnetztransformators (rONT) definiert und im laufenden Betrieb optimiert. Die Eingangsdaten/-größen EG umfassen die Nennleistung Srt des Transformators T und vorzugsweise eine Messung einer Leistung P/eines Stroms am Transformator T, Spannungen U z.B. von Smart Metern aus dem unterlagerten Netzgebiet/Stromnetz 1 (z.B. Netzzustandsdaten TAF 10 - Abruf von Netzzustandsdaten: ermöglicht die Bereitstellung sowie den Versand von Netzzustandsdaten im Smart-Meter-Gateway und den Statusinformation der am Gateway angeschlossenen Zähler. Der zeitliche Versand der Daten erfolgt in festgelegten gleichen Abständen oder bei Eintritt von bestimmten Ereignissen). Eine zeitliche Auflösung (der Messungen) liegt vorzugsweise bei maximal 1 min bis mindestens 10 min, höhere oder geringere Auflösungen jedoch möglich.

Die Messeinrichtung 100 ist vorzugsweise eingerichtet ist, um von einer Messdatenquelle 10, insbesondere vorzugsweise einer Multimessvorrichtung, eine Messwerthistorie der Wirkleistung (des Transformators T) zu empfangen. Insbesondere bevorzugt umfasst die Messdatenquelle 10 zusätzlich ein intelligentes Messsystem, iMSys, und empfängt die Messeinrichtung 100 zusätzlich eine Messwerthistorie einer Spannung durch das iMSys in einer Weitbereichsregelung. Mit anderen Worten, werden in einer Basisversion historische Messdaten der Wirkleistung (3-Phasiger Bezug bzw. Einspeisung) am Ortsnetztransformator, z.B. gemessen durch ein Multimessgerät, als Eingangsdaten für den Algorithmus verwendet, bzw. werden in einer erweiterten Version historische Messdaten der Spannung an Netzanschlüssen, z.B. gemessen durch ein intelligentes Messystem, iMSys, zusätzlich als Eingangsdaten für den Algorithmus verwendet (z.B. wie bei einer Weitbereichsregelung).

Die optimalen Betriebsparameter BP definieren vorzugsweise eine Regelkennlinie. Mit anderen Worten, basierend auf den Messdaten MD ermittelt der Algorithmus vorzugsweise die optimalen (Betriebs-)Parameter BP für die dynamische Sollwertvorgabe. Wie in Fig. 1 im Graph im Kasten der Ermittlungseinrichtung 102 gezeigt, umfasst die Regelkennlinie vorzugsweise eine Abszisse, die einen Quotienten aus einer Differenz der Ausgangsleistung P des Transformators T minus der Nennleistung Srt des Transformators über der Nennleistung Srt des Transformators T als Prozentwert definiert (vgl. " $\frac{P - Srt}{Srt}$" bzw. "(P - Srt)/Srt" in Fig. 1), und eine Ordinate, die einen Quotienten aus einer Ausgangsspannung U des Transformators T über einer Nennspannung Un (des Transformators T) als Prozentwert definiert ("U/Un" in Fig. 1). Positive Werte auf der Abszisse (z.B. (P - Srt)/Srt > 0) definieren vorzugsweise einen Bezugsbetrieb des Transformators T, bei dem durch das Stromnetz 1 aus dem Transformator T Wirkleistung bezogen wird, negative Werte auf der Abszisse (z.B. (P - Srt)/Srt < 0) definieren vorzugsweise einen Einspeisebetrieb des Transformators T, bei dem aus dem Stromnetz 1 dem Transformator T Wirkleistung eingespeist wird, und ein Ursprung (z.B. (P - Srt)/Srt = 0 und U/Un = 100 %) auf Abszisse und Ordinate definiert vorzugsweise einen ausgewogenen Betrieb des Transformators.

In diesem Zusammenhang umfasst die Regelkennlinie vorzugsweise einen ersten Abschnitt, der als Konstante im dritten Quadranten (III in Fig. 1) verläuft, einen zweiten Abschnitt, der an den ersten Abschnitt anschließt und zumindest teilweise im dritten Quadranten (III in Fig. 1) als Gerade mit einer ersten konstanten Steigung bis zu einem Nullpunkt NP verläuft, einen dritten Abschnitt, der an den zweiten Abschnitt anschließt und zumindest teilweise im ersten Quadranten (I in Fig. 1) von dem Nullpunkt NP aus als Gerade mit einer zweiten konstanten Steigung verläuft, und einen vierten Abschnitt, der an den dritten Abschnitt anschließt und als Konstante im ersten Quadranten (I in Fig. 1) verläuft. Mit anderen Worten, die Betriebsparameter PB können die erste/zweite Steigung bei positiver/negative Auslastungssituation AL (des Transformators T) umfassen. Die optimalen Betriebsparameter BP umfassen vorzugsweise:
- einen ersten Knickpunkt KP1 am Übergang von dem dritten Abschnitt in den vierten Abschnitt - d.h. Knickpunkt KP 1 der Regelkennlinie bei positiver Auslastung, mit anderen Worten, Knickpunkt KP1 bei Bezug, wobei (P-Srt)/Srt im Bereich Bezug (z.B. +40 %) liegt und wobei U/Un im Bereich Bezug (z.B. 104 %) liegt
- den Nullpunkt NP am Übergang von dem zweiten Abschnitt in den dritten Abschnitt - d.h. der Y-Achsenabschnitt der Regelkennlinie (Spannungssollwert), der aus dem Ursprung bei (P-Srt)/Srt (z.B. 0 %) und U/Un (z.B. 100 %) verschoben werden kann
- eine Maximalspannung Umax des Transformators T bei Bezugsbetrieb als die Konstante des vierten Abschnitts - d.h. maximaler Spannungssollwert U/Un bei Bezug (Umax) z.B. 104 % (und (P-Srt)/Srt bei Bezug +100 %)

Im Falle einer dominierenden Starklastsituation des Transformators T, insbesondere vorzugsweise verbunden mit einer Spannungsabsenkung am Transformator T, ist die Ermittlungseinrichtung 102 vorzugsweise eingerichtet, um den Nullpunkt NP auf der Ordinate U/Un aus dem Ursprung in positiver Richtung zu verschieben. Mit anderen Worten, die dominierende Starklastsituation (verbunden mit Spannungsabsenkungen) führt vorzugsweise tendenziell zu einer positiven Anpassung des Nullpunkts NP auf der Ordinate (d.h. U/Un > 100 % und (P-Srt)/Srt = 0 %), vgl. Verschiebungspfeil (1) in Fig. 1.

Im Falle einer dominierenden Starkeinspeisesituation, insbesondere vorzugsweise verbunden mit einer Spannungsanhebung am Transformator T, ist die Ermittlungseinrichtung 102 vorzugsweise eingerichtet, um den Nullpunkt NP auf der Ordinate U/Un aus dem Ursprung in negativer Richtung zu verschieben. Mit anderen Worten, die dominierende Starkeinspeisesituation (verbunden mit Spannungsanhebung) führt vorzugsweise tendenziell zu einer negativen Anpassung des Nullpunkts NP auf der Ordinate (d.h. U/Un < 100 % und (P-Srt)/Srt = 0 %), vgl. Verschiebungspfeil (2) in Fig. 1.

Im Falle eines Lastzuwachses am Transformator, insbesondere vorzugsweise durch Zubau von Wärmepumpen und/oder Elektromobilität, ist die Ermittlungseinrichtung 102 vorzugsweise eingerichtet, um die Maximalspannung Umax anzuheben. Mit anderen Worten, Lastzuwachs durch Zubau von Wärmepumpen und Elektromobilität führt vorzugsweise zu einer Überschreitung der bisherigen Maximalwerte von (P-Srt)/Srt - dies wird vorzugsweise durch eine Anhebung von Umax berücksichtigt, vgl. Verschiebungspfeil (3) in Fig. 1. Je nach der Charakteristik der Leistungs-/Strommessungen am Transformator, sind weitere Anpassungen, z.B. auch in Kombination der vorstehend beschriebenen Maßnahmen möglich.

Die optimalen Betriebsparameter BP umfassen vorzugsweise ferner:
- einen zweiten Knickpunkt KP2 am Übergang von dem ersten Abschnitt in den zweiten Abschnitt - d.h. Knickpunkt KP2 der Regelkennlinie bei negativer Auslastung, also Knickpunkt KP2 bei Einspeisung KP2, (P-Srt)/Srt liegt bei Einspeisung (z.B. -40 %) und U/Un liegt bei Einspeisung (z.B. 96 %)
- eine Minimalspannung Umin des Transformators T bei Einspeisebetrieb als die Konstante des ersten Abschnitts - d.h. minimaler Spannungssollwert, also minimaler U/Un bei Einspeisung (Umin) z.B. 96 % (d.h. (P-Srt)/Srt bei Einspeisung -100 %)

Die Ermittlungseinrichtung 102 ist vorzugsweise eingerichtet, um die optimalen Betriebsparameter BP fortlaufend zu ermitteln. Mit anderen Worten, durch kontinuierliche Datenaufnahme kann die Parametrierung fortlaufend optimiert werden - somit wird auch eine veränderte Belastungscharakteristik z.B. durch den Zubau von Einspeise- und Bezugsanlagen berücksichtigt.

Die Regelungsvorrichtung 100 umfasst schließlich ferner eine Regelungseinrichtung 103, die eingerichtet ist, um den Transformator T auf der Grundlage der ermittelten optimalen Betriebsparameter BP dynamisch zu regeln. Mit anderen Worten, die durch den Algorithmus bestimmten Parameter werden z.B. an den Transformator (rONT) T übermittelt und durch diesen umgesetzt. Der Algorithmus wird vorzugsweise lokal in der Ortsnetzstation betrieben, wenn keine Kommunikationsanbindung besteht. Alternativ werden mit Kommunikationsanbindung an zentraler Stelle die Parameter BP ermittelt und an die Regeleinrichtung 100/das Steuergerät des Transformators T gesendet, wo diese vorzugsweise für den Fall eines Kommunikationsausfalls gespeichert werden.

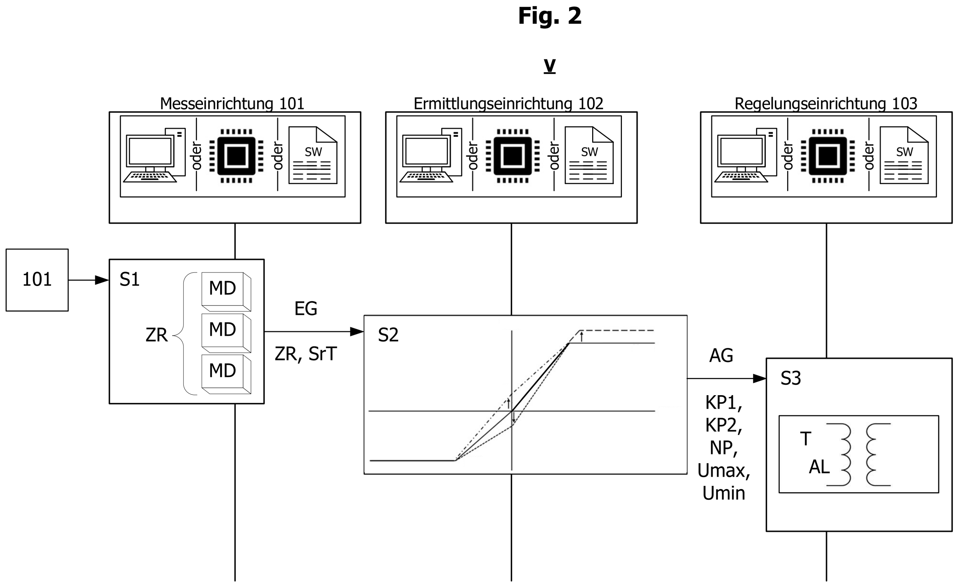

Erfindungsgemäß wird ebenfalls in Computerprogramm CP bereitgestellt, das Codeabschnitte speichert, die bei Ausführung auf einem Prozessor µP der Regelungsvorrichtung 100 die Regelungsvorrichtung 100 veranlassen, alle Schritte des (nachstehend in Fig. 2 beschriebenen) Verfahrens durchzuführen.

Erfindungsgemäß wird außerdem ein computerlesbares Medium MEM bereitgestellt, das eingerichtet ist, um das vorstehend beschriebene Computerprogram CP zu speichern.

Fig. 2 zeigt ein Verfahren V zum parametrierten Regeln eines Transformators T gemäß einem Ausführungsbeispiel.

Das Verfahren V zum parametrierten Regeln eines Transformators T umfasst die Schritte:
- Erlangen S1 (z.B. durch die Messeinrichtung 101 einer Zeitreihe ZR statischer Messdaten MD einer Wirkleistung des Transformators T
- Ermitteln S2 (z.B. durch die Ermittlungseinrichtung 102), mit der Zeitreihe ZR statischer Messdaten MD und einer Nennleistung Srt des Transformators T als Eingangsgrößen EG, von optimalen Betriebsparametern KP1, KP2, NP, Umax, Umin (BP) für den Transformator T als Ausgangsgrößen AG derart, dass die Betriebsparameter BP hinsichtlich einer aktuell dominierenden Auslastungssituation AL des Transformators T optimiert werden
- dynamisches Regeln S3 (durch die Regelungseinrichtung 103) des Transformators T auf der Grundlage der ermittelten optimalen Betriebsparameter BP

Das Verfahren V kann dieselben oder ähnliche Implementierungen und Vorteile umfassen wie die Regelungsvorrichtung 100, die vorstehend beschrieben wurde.

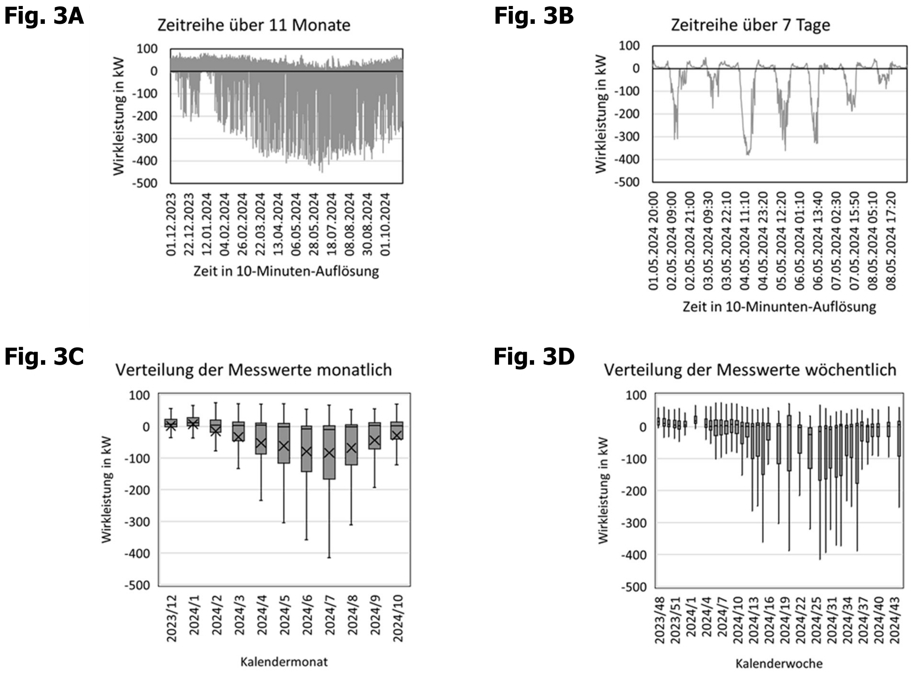

Figuren 3A bis 3D ein Anwendungsbeispiel mit realen Messdaten in einem Beispielnetz (z.B. dem Stromnetz 1).

Das Beispielnetz 1 versorgt z.B. dörfliche Strukturen mit dominierender Einspeisung z.B. aus Photovoltaikanlagen im Sommer. Die Zeitreihe ZR in Fig. 3A über 11 Monate und in Fig. 3B über 7 Tage zeigen eine saisonale (in Fig. 3A) und tägliche (in Fig. 3B) Lastcharakteristik AL. Die monatliche bzw. wöchentliche Verteilung der Messwerte MD ist in den Boxplots in Fig. 3C bzw. Fig. 3D dargestellt:
- Die Parametrierung für die ausgewogene Auslastungssituation (vgl. Fig. 1, Kasten 102, durchgezogene Line mit "Standardparametern") ist von Oktober bis Februar vorzufinden
- Die Parametrierung für den dominierenden Bezug (vgl. Fig. 1, Kasten 102, Verschiebungspfeil (1) - Strichpunktlinie) ist im betrachteten Netz nicht vorzufinden
- Die Parametrierung für die dominierende Einspeisung (vgl. Fig. 1, Kasten 102, Verschiebungspfeil (2) - gestrichelte Linie) tritt von März bis September auf
- Ein Zuwachs durch Zubau von Wärmepumpen und Elektromobilität (z.B. > 100 kW) führt zu einer Überschreitung der bisherigen Maximalwerte und einer Parametermeteranpassung, vgl. Fig. 1, Kasten 102, Verschiebungspfeil (3).

Die Vorteile der hier vorgestellten Technik sind aus der vorstehenden Beschreibung vollständig ersichtlich und ausführbar, und es wird deutlich, dass verschiedene Änderungen an der Form, der Konstruktion und der Anordnung der beispielhaften Ausgestaltungen vorgenommen werden können, ohne den Schutzbereich der vorliegenden Offenbarung zu verlassen oder auf alle ihre vorteilhaften Wirkungen zu verzichten. Da die hier vorgestellte Technik auf vielfältige Weise variiert werden kann, ist ersichtlich, dass die vorliegende Offenbarung lediglich durch den Schutzbereich der nachfolgenden Ansprüche beschränkt wird.

## Patentansprüche

1. Regelungsvorrichtung (100) zum parametrierten Regeln eines Transformators (T), die umfasst:
eine Messeinrichtung (101), die eingerichtet ist, um eine Zeitreihe (ZR) statischer Messdaten (MD) einer Wirkleistung des Transformators zu erlangen;
eine Ermittlungseinrichtung (102), die eingerichtet ist, um mit der Zeitreihe statischer Messdaten und einer Nennleistung (Srt) des Transformators als Eingangsgrößen (EG) optimale Betriebsparameter (KP1, KP2, NP, Umax, Umin) für den Transformator als Ausgangsgrößen (AG) derart zu ermitteln, dass die Betriebsparameter hinsichtlich einer aktuell dominierenden Auslastungssituation (AL) des Transformators optimiert werden; und
eine Regelungseinrichtung (103), die eingerichtet ist, um den Transformator auf der Grundlage der ermittelten optimalen Betriebsparameter dynamisch zu regeln.

2. Regelungsvorrichtung nach Anspruch 1, wobei die optimalen Betriebsparameter eine Regelkennlinie definieren, die umfasst:
eine Abszisse, die einen Quotienten aus einer Differenz der Ausgangsleistung (P) des Transformators minus der Nennleistung des Transformators über der Nennleistung des Transformators als Prozentwert definiert, und
eine Ordinate, die einen Quotienten aus einer Ausgangsspannung (U) des Transformators über einer Nennspannung (Un) als Prozentwert definiert.

3. Regelungsvorrichtung nach Anspruch 2, wobei:
positive Werte auf der Abszisse einen Bezugsbetrieb des Transformators definieren, bei dem durch ein Stromnetz aus dem Transformator Wirkleistung bezogen wird,
negative Werte auf der Abszisse einen Einspeisebetrieb des Transformators definieren, bei dem aus dem Stromnetz dem Transformator Wirkleistung eingespeist wird, und
ein Ursprung auf Abszisse und Ordinate einen ausgewogenen Betrieb des Transformators definiert.

4. Regelungsvorrichtung nach Anspruch 2 oder 3, wobei die Regelkennlinie umfasst:
einen ersten Abschnitt, der als Konstante im dritten Quadranten verläuft,
einen zweiten Abschnitt, der an den ersten Abschnitt anschließt und zumindest teilweise im dritten Quadranten als Gerade mit einer ersten konstanten Steigung bis zu einem Nullpunkt (NP) verläuft,
einen dritten Abschnitt, der an den zweiten Abschnitt anschließt und zumindest teilweise im ersten Quadranten von dem Nullpunkt aus als Gerade mit einer zweiten konstanten Steigung verläuft, und
einen vierten Abschnitt, der an den dritten Abschnitt anschließt und als Konstante im ersten Quadranten verläuft.

5. Regelungsvorrichtung nach Anspruch 4, wobei die optimalen Betriebsparameter umfassen:
einen ersten Knickpunkt (KP1) am Übergang von dem dritten Abschnitt in den vierten Abschnitt,
den Nullpunkt am Übergang von dem zweiten Abschnitt in den dritten Abschnitt, und
eine Maximalspannung (Umax) des Transformators bei Bezugsbetrieb als die Konstante des vierten Abschnitts.

6. Regelungsvorrichtung nach Anspruch 5, wobei:
im Falle einer dominierenden Starklastsituation des Transformators, vorzugsweise verbunden mit einer Spannungsabsenkung am Transformator, die Ermittlungseinrichtung eingerichtet ist, um den Nullpunkt auf der Ordinate aus dem Ursprung in positiver Richtung zu verschieben,
im Falle einer dominierenden Starkeinspeisesituation, vorzugsweise verbunden mit einer Spannungsanhebung am Transformator, die Ermittlungseinrichtung eingerichtet ist, um den Nullpunkt auf der Ordinate aus dem Ursprung in negativer Richtung zu verschieben, und
im Falle eines Lastzuwachses am Transformator, vorzugsweise durch Zubau von Wärmepumpen und/oder Elektromobilität, die Ermittlungseinrichtung eingerichtet ist, um die Maximalspannung anzuheben.

7. Regelungsvorrichtung nach Anspruch 5 oder 6, wobei:
der erste Knickpunkt auf der Abszisse bei +40% und auf der Ordinate bei 104% liegt,
der Nullpunkt auf der Abszisse bei 0% und auf der Ordinate bei 100% liegt, und
die Maximalspannung auf der Ordinate bei 104% liegt.

8. Regelungsvorrichtung nach einem der Ansprüche 5 bis 7, wobei die optimalen Betriebsparameter ferner umfassen:
einen zweiten Knickpunkt (KP2) am Übergang von dem ersten Abschnitt in den zweiten Abschnitt, und
eine Minimalspannung (Umin) des Transformators bei Einspeisebetrieb als die Konstante des ersten Abschnitts.

9. Regelungsvorrichtung nach Anspruch 8, wobei:
der zweite Knickpunkt auf der Abszisse bei -40% und auf der Ordinate bei 96% liegt, und
die Minimalspannung auf der Ordinate bei 96% liegt.

10. Regelungsvorrichtung nach einem der Ansprüche 1 bis 9, wobei:
die Ermittlungseinrichtung eingerichtet ist, um die optimalen Betriebsparameter fortlaufend zu ermitteln, und /oder
der Transformator ein regelbarer Ortsnetztransformator, rONT, ist.

11. Regelungsvorrichtung nach einem der Ansprüche 1 bis 10, die ferner umfasst:
die Messeinrichtung eingerichtet ist, um von einer Messdatenquelle (10), vorzugsweise einer Multimessvorrichtung, eine Messwerthistorie der Wirkleistung zu empfangen.

12. Regelungsvorrichtung nach Anspruch 11, wobei:
die Messdatenquelle zusätzlich ein intelligentes Messsystem, iMSys, umfasst und die Messeinrichtung zusätzlich eine Messwerthistorie einer Spannung durch das iMSys in einer Weitbereichsregelung empfängt.

13. Verfahren (V) zum parametrierten Regeln eines Transformators (T), das die Schritte umfasst:
Erlangen (S1) einer Zeitreihe (ZR) statischer Messdaten (MD) einer Wirkleistung des Transformators;
Ermitteln (S2), mit der Zeitreihe statischer Messdaten und einer Nennleistung (Srt) des Transformators als Eingangsgrößen (EG), von optimalen Betriebsparametern (KP1, KP2, NP, Umax, Umin) für den Transformator als Ausgangsgrößen (AG) derart, dass die Betriebsparameter hinsichtlich einer aktuell dominierenden Auslastungssituation (AL) des Transformators optimiert werden; und
dynamisches Regeln (S3) des Transformators auf der Grundlage der ermittelten optimalen Betriebsparameter.

14. Computerprogramm (CP), das Codeabschnitte speichert, die bei Ausführung auf einem Prozessor (µP) einer Regelungsvorrichtung (100) die Regelungsvorrichtung veranlassen, alle Schritte des Verfahrens nach Anspruch 13 durchzuführen.

15. Computerlesbares Medium (MEM), das eingerichtet ist, um das Computerprogram nach Anspruch 14 zu speichern.
